(19) Europäisches Patentamt
European Patent Office
Office européen des brevets

(11) **EP 2 513 154 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(21) Anmeldenummer: **10790558.0**

(22) Anmeldetag: **13.12.2010**

(51) Int Cl.:
***C08F 2/22*** *(2006.01)*

(86) Internationale Anmeldenummer:
**PCT/EP2010/069464**

(87) Internationale Veröffentlichungsnummer:
**WO 2011/082965 (14.07.2011 Gazette 2011/28)**

(54) **VERFAHREN ZUR HERSTELLUNG WÄSSRIGER HYBRIDBINDEMITTEL MIT NIEDRIGEM RESTMONOMERENGEHALT SOWIE DEREN VERWENDUNG FÜR HOCHGLANZFARBEN**

USE OF AQUEOUS HYBRID BINDING AGENTS FOR GLOSS PAINTS

UTILISATION DE LIANTS HYBRIDES AQUEUX POUR DES COULEURS BRILLANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2009 EP 09179401**

(43) Veröffentlichungstag der Anmeldung:
**24.10.2012 Patentblatt 2012/43**

(73) Patentinhaber: **BASF SE**
**67056 Ludwigshafen (DE)**

(72) Erfinder:
• **ROLLER, Sebastian**
**68167 Mannheim (DE)**
• **BALK, Roelof**
**67459 Böhl-Iggelheim (DE)**
• **DERSCH, Rolf**
**67434 Neustadt (DE)**

(56) Entgegenhaltungen:
**EP-A1- 2 009 072    DE-A1-102005 049 402**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft die Verwendung wässriger Hybridbindemittel zur Herstellung von Beschichtungsmitteln, insbesondere in hochglänzenden Anstrichmitteln (Hochglanzlacken), sowie ein Verfahren zu deren Herstellung mit niedrigem Restmonomerengehalt.

Gemäß ihrer Fähigkeit, Licht zu reflektieren, werden Beschichtungen üblicherweise in vier Kategorien eingeteilt (DIN EN 13300):

1. "glänzend" mit einem Reflektometerwert von $\geq$ 60 bei einem Messwinkel von 60°,

2. "mittlerer Glanz" mit einem Reflektometerwert von < 60 bei einem Messwinkel von 60° und $\geq$10 bei 85°,

3. "matt" mit einem Reflektometerwert von < 10 bei einem Messwinkel von 85° und,

4. "stumpfmatt" mit einem Reflektometerwert von < 5 bei einem Messwinkel von 85°.

Die Qualität nicht pigmentierter und speziell pigmentierter Beschichtungsmittel auf Basis wässriger Polymerdispersionen hängt entscheidend vom Glanz der erhaltenen Beschichtungen ab. Es hat daher nicht an Versuchen gefehlt, diesen durch geeignete Zusätze zu verbessern. Vielfach weisen diese Zusätze jedoch den Nachteil auf, noch eine gewisse Flüchtigkeit aufzuweisen, was sich negativ auf den Anteil flüchtiger organischer Verbindungen (volatile organic compounds, VOC) und der daraus erhaltenen Beschichtungen auswirkt.

Die EP2009072 beschreibt eine Acetoacetoxyethyl(meth)acrylat (AAEM) enthaltende wäßrige Polymerzusammensetzung für dekorative und schützende Beschichtungen, die 8-35% eines autoxidierbaren Materials (z.B. eines Alkyds) durch Kaltabmischung oder durch Zugabe während der Formulierung enthält.

EP 874 875 offenbart eine Hybridbindemittelzusammensetzung auf Wasserbasis sowie deren Verwendung als Komponente in einer Farb- oder Lackmischung, wobei die Hybridbindemittelzusammensetzung einen Trockengehaltanteil von 60 bis 95 Gew.-% besitzt.

DE 313 2937 offenbart ein Verfahren zur Herstellung von wasserverdünnbaren Harzzubereitungen auf Basis von Alkydharzen und/oder Polyacrylaten, wobei in einer ersten Stufe die wasserverdünnbare Alkydharz-Dispersion hergestellt wird und anschließend die so erhaltene Alkydharz-Dispersion in einer zweiten Verfahrensstufe mit Acrylsäure- bzw. Methacrylsäurederivaten polymerisiert wird.

In der US 6,333,378 werden wasserbasierte Alkyd-Acrylat-Hybridsysteme offenbart, die mittels einer Polymerisation einer vorher gescherten Miniemulsion eines Alkyds und mindestens eines Acrylatmonomers mit einer latent oxidativen Funktionalität hergestellt werden.

WO2008/152078 offenbart VOC-arme wässrige Alkyd-Acrylat-Hybridbindemittel, die durch ein paralleles Zulaufverfahren hergestellt werden und dadurch zu Bindemitteln mit hohen Acrylat-Restmonomergehalten führen.

Diese Zusammensetzungen des Standes der Technik haben zum einen den Nachteil, dass sie nicht den gewünschten Anforderungen hinsichtlich Glanz und/oder Oberflächenglätte entsprechen, einen hohen Anteil an Alkyden sowie hohe Restmonomerengehalte aufweisen.

Die Aufgabe der Erfindung bestand daher in der Entwicklung eines Verfahrens zur Herstellung von wasserbasierten Alkyd-Acrylat-Hybridbindemitteln, sowie deren Verwendung für Anstrichmittel, insbesondere für Hochglanzlacke und deren Formulierung, die sich durch einen sehr hohen Glanz und niedrigen Glanzschleier bei gleichzeitig hoher Deckkraft und niedrigem Restmonomerengehalten auszeichnen.

Erfindungsgemäß gelöst wurde die Aufgabe durch ein Verfahren zur Herstellung einer wässrigen Polymerdispersion (PD) durch radikalische Emulsionspolymerisation von

(a) mindestens einem $\alpha,\beta$-ethylenisch ungesättigten Monomer (M)

(b) sowie gegebenenfalls wenigstens einem weiteren Monomer (M1) zu einem Polymer (P)

(c) gegebenenfalls anschließender chemischer Desodorierung und

(d) Zugabe mindestens eines wasserlöslichen Alkydharzes mit einem gewichtsmittleren Molekulargewicht zwischen 5000 und 40 000 Da oder mindestens einer wäßrigen Alkyd- oder Polyurethan-Alkydemulsion,

dadurch gekennzeichnet, dass die Zugabe des Alkydharzes oder der Alkyd- oder Polyurethan-Alkydemulsion entweder im Anschluß an die Polymerisation von M und M1, mit einer Nachrührzeit von 0-2 h oder im Anschluß an die chemische Desodorierung mit einer Nachrührzeit von 0-2 h erfolgt, wobei die Temperatur bei der Zugabe 60 bis 99 °C, bevorzugt 70 bis 95°C und insbesondere 80 bis 90 °C beträgt.

Ein weiterer Gegenstand der Erfindung sind Beschichtungsmittel in Form einer wässrigen Zusammensetzung, enthaltend:

-   wenigstens eine Dispersion wie im Folgenden definiert, - gegebenenfalls wenigstens einen anorganischen Füllstoff und/oder anorganisches Pigment,

- übliche Hilfsmittel, und
- Wasser auf 100 Gew.-%.

Ein weiterer Gegenstand der Erfindung ist ein Verfahren zur Erhöhung des Glanzes einer Beschichtung auf Basis einer wässrigen Polymerdispersion (PD), die durch radikalische Emulsionspolymerisation wenigstens eines $\alpha, \beta$-ethylenisch ungesättigten Monomers (M) erhältlich ist, durch Reaktion mit wenigstens einem wasserlöslichen Alkydharzes oder einer wäßrigen Alkyd- oder Polyurethan-Alkyd-Emulsion im Anschluß an die Polymerisation von M und M1 oder im Anschluß an die der wäßrigen radikalischen Acrylatpolymerisation nachgeschalteten chemische Nachbehandlung (Desodorierung), wie oben definiert.

Die Zugabe des wasserlöslichen Alkydharzes oder der wäßrigen Alkyd- oder Polyurethan-Alkyd-Emulsion zu der Polymerdispersion (PD) erfolgt vorzugsweise nach der Emulsionspolymerisation zur Herstellung des Poymers (P). Die Zugabe des wasserlöslichen Alkydharzes oder der wäßrigen Alkyd- oder Polyurethan-Alkyd-Emulsion zu der Polymerdispersion (PD) kann direkt im Anschluß an die Polymerisation, d.h. direkt nach Beendigung des Initiatorzulaufs erfolgen. Bevorzugt erfolgt die Zugabe nach Beendigung der Polymerisation und der, wie zuvor definierten Nachrührzeit. Besonders bevorzugt erfolgt die Zugabe nach der chemischen Desodorierung. Ganz besonders bevorzugt erfolgt die Zugabe nach der chemischen Desodorierung einschließlich der zuvor definierten Nachrührzeit. Die Nachrührzeit beträgt 0 bis 2 h, bevorzugt weniger als 1 h, besonders bevorzugt 30 min.

Ein weiterer Gegenstand der Erfindung ist die Verwendung einer wässrigen Polymerdispersion (PD), die ein wasserlösliches Alkydharz oder eine wäßrige Alkyd- oder Polyurethan-Alkyd-Emulsion wie zuvor definiert, enthält, als Komponente in Klarlacken und in Hochglanzfarben.

Die Bestimmung des Glanzes des Anstrichmittels kann nach DIN 67530 erfolgen. Dazu wird das Anstrichmittel mit 240 $\mu$m Spaltweite auf eine Glasplatte aufgetragen und 72 Stunden lang bei Raumtemperatur getrocknet. Der Prüfkörper wird in ein kalibriertes Reflektometer eingesetzt, und bei definiertem Einfallswinkel wird festgestellt, inwieweit das zurückgeworfene Licht reflektiert oder gestreut worden ist. Der ermittelte Reflektometerwert ist ein Maß für den Glanz (je höher der Wert, desto höher der Glanz).

Die erfindungsgemäß eingesetzte Polymerdispersion (PD) enthält vorzugsweise 5-60 Gew.-% (fest), besonders bevorzugt 10-50 Gew.-% (fest), bezogen auf das Gesamtgewicht des Hybridbindemittels, wenigstens eines wasserlöslichen Alkydharzes oder einer wäßrigen Alkyd- oder Polyurethan-Alkyd-Emulsion.

Der erfindungsgemäße Einsatz der wasserlöslichen Alkydharze oder der wäßrigen Alkyd- oder Polyurethan-Alkyd-Emulsionen im Anschluß an die Emulsionspolymerisation bzw. im Anschluß an die chemische Desodorierung bringt den folgenden Vorteil mit sich:

- Erhöhung des Glanzes von Beschichtungsmitteln (Anstrichmitteln), speziell von Glanzfarben auf Basis von Acrylatdispersionen bei einer gleichzeitig (im Vergleich zu anderen Hybridisierungsverfahren) reduzierten Menge an Acrylatrestmonomeren.

Im Rahmen der vorliegenden Erfindung umfasst der Ausdruck Alkyl geradkettige und verzweigte Alkylgruppen. Geeignete kurzkettige Alkylgruppen sind z. B. geradkettige oder verzweigte $C_1$-$C_7$-Alkyl-, bevorzugt $C_1$-$C_6$-Alkyl- und besonders bevorzugt $C_1$-$C_4$-Alkylgruppen. Dazu zählen insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl etc.

Geeignete längerkettige $C_8$-$C_{30}$-Alkylgruppen sind geradkettige und verzweigte Alkylgruppen. Bevorzugt handelt es sich dabei um überwiegend lineare Alkylreste, wie sie auch in natürlichen oder synthetischen Fettsäuren und Fettalkoholen sowie Oxoalkoholen vorkommen. Dazu zählen z. B. n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl etc. Der Ausdruck Alkyl umfasst unsubstituierte und substituierte Alkylreste.

Die vorstehenden Ausführungen zu Alkyl gelten auch für die Alkylteile in Arylalkyl. Bevorzugte Arylalkylreste sind Benzyl und Phenylethyl.

$C_8$-$C_{32}$-Alkenyl steht im Rahmen der vorliegenden Erfindung für geradkettige und verzweigte Alkenylgruppen, die einfach, zweifach oder mehrfach ungesättigt sein können. Vorzugsweise handelt es sich um $C_{10}$-$C_{20}$-Alkenyl. Der Ausdruck Alkenyl umfasst unsubstituierte und substituierte Alkenylreste. Speziell handelt es sich dabei um überwiegend lineare Alkenylreste, wie sie auch in natürlichen oder synthetischen Fettsäuren und Fettalkoholen sowie Oxoalkoholen vorkommen. Dazu zählen insbesondere Octenyl, Nonenyl, Decenyl, Undecenyl, Dodecenyl, Tridecenyl, Tetradecenyl, Pentadecenyl, Hexadecenyl, Heptadecenyl, Octadecenyl, Nonadecenyl, Linolyl, Linolenyl, Eleostearyl und Oleyl (9-Octadecenyl).

Der Ausdruck Alkylen im Sinne der vorliegenden Erfindung steht für geradkettige oder verzweigte Alkandiyl-Gruppen mit 1 bis 7 Kohlenstoffatomen, z. B. Methylen, 1,2-Ethylen, 1,3-Propylen, etc.

Cycloalkyl steht vorzugsweise für $C_4$-$C_8$-Cycloalkyl, wie Cyclobutyl, Cyclopentyl, Cyclohexyl, Cycloheptyl oder Cyclooctyl.

Der Ausdruck Aryl umfasst im Rahmen der vorliegenden Erfindung ein- oder mehrkernige aromatische Kohlenwasserstoffreste, die unsubstituiert oder substituiert sein können. Der Ausdruck Aryl steht vorzugsweise für Phenyl, Tolyl, Xylyl, Mesityl, Duryl, , Fluorenyl, Anthracenyl, Phenanthrenyl oder Naphthyl, besonders bevorzugt für Phenyl oder Naphthyl, wobei diese Arylgruppen im Falle einer Substitution im Allgemeinen 1, 2, 3, 4 oder 5, vorzugsweise 1, 2 oder 3 Substituenten tragen können.

Zur Herstellung der Polymerdispersion (PD) wird wenigstens ein $\alpha$, $\beta$-ethylenisch ungesättigtes Monomer (M) eingesetzt, das vorzugsweise ausgewählt ist aus Estern $\alpha$, $\beta$ -ethylenisch ungesättigter Mono- und Dicarbonsäuren mit $C_1$-$C_{20}$-Alkanolen, Vinylaromaten, Estern von Vinylalkohol mit $C_1$-$C_{30}$-Monocarbonsäuren, ethylenisch ungesättigten Nitrilen, Vinylhalogeniden, Vinylidenhalogeniden, monoethylenisch ungesättigten Carbon- und Sulfonsäuren, phosphorhaltigen Monomeren, Estern $\alpha$, $\beta$ -ethylenisch ungesättigter Mono- und Dicarbonsäuren mit $C_2$-$C_{30}$-Alkandiolen, Amiden $\alpha$, $\beta$-ethylenisch ungesättigter Mono- und Dicarbonsäuren mit $C_2$-$C_{30}$-Aminoalkoholen, die eine primäre oder sekundäre Aminogruppe aufweisen, primären Amiden $\alpha$, $\beta$-ethylenisch ungesättigter Monocarbonsäuren und deren N-Alkyl- und N,N-Dialkylderivaten, N-Vinyllactamen, offenkettigen N-Vinylamidverbindungen, Estern von Allylalkohol mit $C_1$-$C_{30}$-Monocarbonsäuren, Estern von $\alpha$, $\beta$-ethylenisch ungesättigten Mono- und Dicarbonsäuren mit Aminoalkoholen, Amiden $\alpha$, $\beta$-ethylenisch ungesättigten Mono- und Dicarbonsäuren mit Diaminen, welche mindestens eine primäre oder sekundäre Aminogruppe aufweisen, N,N-Diallylaminen, N,N-Diallyl-N-alkylaminen, vinyl- und allylsubstituierten Stickstoffheterocyclen, Vinylethern, $C_2$-$C_8$-Monoolefinen, nicht aromatischen Kohlenwasserstoffen mit mindestens zwei konjugierten Doppelbindungen, Polyether(meth)acrylaten, Harnstoffgruppen aufweisenden Monomeren und Mischungen davon.

Geeignete Ester $\alpha$, $\beta$-ethylenisch ungesättigter Mono- und Dicarbonsäuren mit $C_1$-$C_{20}$-Alkanolen sind Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, sec.-Butyl(meth)acrylat, tert.-Butyl(meth)acrylat, tert.-Butylethacrylat, n-Hexyl(meth)acrylat, n-Heptyl(meth)acrylat, n-Octyl(meth)acrylat, 1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arachinyl(meth)acrylat, Behenyl(meth)acrylat, Lignoceryl(meth)acrylat, Cerotinyl(meth)acrylat, Melissinyl(meth)acrylat, Palmitoleinyl(meth)acrylat, Oleyl(meth)acrylat, Linolyl(meth)acrylat, Linolenyl(meth)acrylat, Stearyl(meth)acrylat, Lauryl(meth)acrylat und Mischungen davon.

Bevorzugt als Vinylaromaten sind Styrol, 2-Methylstyrol, 4-Methylstyrol, 2-(n-Butyl)styrol, 4-(n-Butyl)styrol, 4-(n-Decyl)styrol und besonders bevorzugt Styrol.

Geeignete Ester von Vinylalkohol mit $C_1$-$C_{30}$-Monocarbonsäuren sind z. B. Vinylformiat, Vinylacetat, Vinylpropionat, Vinylbutyrat, Vinyllaurat, Vinylstearat, Vinylpropionat, Versaticsäurevinylester und Mischungen davon.

Geeignete ethylenisch ungesättigte Nitrile sind Acrylnitril, Methacrylnitril und Mischungen davon.

Geeignete Vinylhalogenide und Vinylidenhalogenide sind Vinylchlorid, Vinylidenchlorid, Vinylfluorid, Vinylidenfluorid und Mischungen davon.

Geeignete ethylenisch ungesättigte Carbonsäuren, Sulfonsäuren oder deren Derivate sind Acrylsäure, Methacrylsäure, Ethacrylsäure, $\alpha$-Chloracrylsäure, Crotonsäure, Maleinsäure, Maleinsäureanhydrid, Itaconsäure, Citraconsäure, Mesaconsäure, Glutaconsäure, Aconitsäure, Fumarsäure, die Halbester von monoethylenisch ungesättigten Dicarbonsäuren mit 4 bis 10, vorzugsweise 4 bis 6 C-Atomen, z. B. Maleinsäuremonomethylester, Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäuren und 2-Acrylamido-2-methylpropansulfonsäure. Geeignete Styrolsulfonsäuren und Derivate davon sind Styrol-4-sulfonsäure und Styrol-3-sulfonsäure und die Erdalkali- oder Alkalimetallsalze davon, z. B. Natrium-styrol-3-sulfonat und Natrium-styrol-4-sulfonat. Besonders bevorzugt sind Acrylsäure, Methacrylsäure und Mischungen davon.

Beispiele für phosphorhaltige Monomere sind z. B. Vinylphosphonsäure und Al-lylphosphonsäure. Geeignet sind weiter die Mono- und Diester der Phosphonsäure und Phosphorsäure mit Hydroxyalkyl(meth)acrylaten, speziell die Monoester. Geeignet sind weiter Diester der Phosphonsäure und Phosphorsäure die einfach mit einem Hydroxyalkyl(meth)acrylat und zusätzlich einfach mit einem davon verschiedenen Alkohol, z. B. einem Alkanol, verestert sind. Geeignete Hydroxyalkyl(meth)acrylate für diese Ester sind die im Folgenden als separate Monomere genannten, insbesondere 2-Hydroxyethyl(meth)acrylat, 3-Hydroxypropyl(meth)acrylat, 4-Hydroxybutyl(meth)acrylat, etc. Entsprechende Dihydrogenphosphatestermonomere umfassen Phosphoalkyl(meth)acrylate, wie 2-Phosphoethyl(meth)acrylat, 2-Phosphopropyl(meth)acrylat, 3-Phosphopropyl(meth)acrylat, Phosphobutyl(meth)-acrylat und 3-Phospho-2-hydroxypropyl(meth)acrylat. Geeignet sind auch die Ester der Phosphonsäure und Phosphorsäure mit alkoxilierten Hydroxyalkyl(meth)acrylaten, z. B. die Ethylenoxidkondensate von (Meth)acrylaten, wie $H_2C=C(CH_3)COO(CH_2CH_2O)_nP(OH)_2$ und $H_2C=C(CH_3)COO(CH_2CH_2O)_nP(=O)(OH)_2$, worin n für 1 bis 50 steht. Weiter geeignet sind Phosphoalkylcrotonate, Phosphoalkylmaleate, Phosphoalkylfumarate, Phosphodialkyl(meth)acrylate, Phosphodialkylcrotona-te und Allylphosphate. Weitere geeignete Phosphorgruppen-haltige Monomere sind in WO 99/25780 und US 4,733,005 beschrieben, worauf hier Bezug genommen wird.

Geeignete Ester $\alpha,\beta$-ethylenisch ungesättigter Mono- und Dicarbonsäuren mit $C_2$-$C_{30}$-Alkandiolen sind z. B. 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat etc.

Geeignete primäre Amide $\alpha,\beta$-ethylenisch ungesättigter Monocarbonsäuren und deren N-Alkyl- und N,N-Dialkylderivate sind Acrylsäureamid, Methacrylsäureamid, N-Methyl(meth)acrylamid, N-Ethyl(meth)acrylamid, N-Propyl(meth)acrylamid, N-(n-Butyl)(meth)acrylamid, N-(tert.-Butyl)(meth)acrylamid, N-(n-Octyl)(meth)acrylamid, N-(1,1,3,3-Tetramethylbutyl)(meth)acrylamid, N-Ethylhexyl(meth)acrylamid, N-(n-Nonyl)(meth)acrylamid, N-(n-Decyl)(meth)acrylamid, N-(n-Undecyl)(meth)acrylamid, N-Tridecyl(meth)acrylamid, N-Myristyl(meth)acrylamid, N-Pentadecyl(meth)acrylamid, N-Palmityl(meth)acrylamid, N-Heptadecyl(meth)acrylamid, N-Nonadecyl(meth)acrylamid, N-Arachinyl(meth)acrylamid, N-Behenyl(meth)acrylamid, N-Lignoceryl(meth)acrylamid, N-Cerotinyl(meth)acrylamid, N-Melissinyl(meth)acrylamid, N-Palmitoleinyl(meth)acrylamid, N-Oleyl(meth)acrylamid, N-Linolyl(meth)acrylamid, N-Linolenyl(meth)acrylamid, N-Stearyl(meth)acrylamid, N-Lauryl(meth)acrylamid, N,N-Dimethyl(meth)acrylamid, N,N-Diethyl(meth)acrylamid, Morpholinyl(meth)acrylamid.

Geeignete N-Vinyllactame und deren Derivate sind z. B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam etc.

Geeignete offenkettige N-Vinylamidverbindungen sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid.

Geeignete Ester von $\alpha,\beta$-ethylenisch ungesättigten Mono- und Dicarbonsäuren mit Aminoalkoholen sind N,N-Dimethylaminomethyl(meth)acrylat, N,N-Dimethylaminoethyl(meth)acrylat, N,N-Diethylaminoethylacrylat, N,N-Dimethylaminopropyl(meth)acrylat, N,N-Diethylaminopropyl(meth)acrylat und N,N-Dimethylaminocyclohexyl(meth)acrylat.

Geeignete Amide $\alpha,\beta$-ethylenisch ungesättigter Mono- und Dicarbonsäuren mit Diaminen, welche mindestens eine primäre oder sekundäre Aminogruppe aufweisen sind N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)-butyl]methacrylamid, N-[2-(Diethylamino)ethyl]acrylamid, N-[4-(Dimethylamino)cyclohexyl]acrylamid, N-[4-(Dimethylamino)cyclohexyl]methacrylamid etc.

Geeignete Monomere (M) sind weiterhin N,N-Diallylamine und N,N-Diallyl-N-alkylamine und deren Säureadditionssalze und Quaternisierungsprodukte. Alkyl steht dabei vorzugsweise für $C_1$-$C_{24}$-Alkyl. Bevorzugt sind N,N-Diallyl-N-methylamin und N,N-Diallyl-N,N-dimethylammonium-Verbindungen, wie z. B. die Chloride und Bromide.

Geeignete Monomere (M) sind weiterhin vinyl- und allylsubstituierte Stickstoffheterocyclen, wie N-Vinylimidazol, N-Vinyl-2-methylimidazol, vinyl- und allylsubstituierte heteroaromatische Verbindungen, wie 2- und 4-Vinylpyridin, 2- und 4-Allylpyridin, und die Salze davon.

Geeignete $C_2$-$C_8$-Monoolefine und nicht aromatische Kohlenwasserstoffe mit mindestens zwei konjugierten Doppelbindungen sind z. B. Ethylen, Propylen, Isobutylen, I-sopren, Butadien, etc.

Geeignete Harnstoffgruppen aufweisende Monomere sind z. B. N-Vinyl- oder N-Allylharnstoff oder Derivate des Imidazolidin-2-ons. Dazu zählen N-Vinyl- und N-Allylimidazolidin-2-on, N-Vinyloxyethylimidazolidin-2-on, N-(2-(Meth)acrylamidoethyl)imidazolidin-2-on, N-(2-(Meth)acryloxyethyl)imidazolidin-2-on (= 2-Ureido(meth)acrylat), N-[2-((Meth)acryloxyacetamido)ethyl]imidazolidin-2-on etc. Bevorzugte Harnstoffgruppen aufweisende Monomere sind N-(2-Acryloxyethyl)imidazolidin-2-on und N-(2-Methacryloxyethyl)imidazolidin-2-on. Besonders bevorzugt ist N-(2-Methacryloxyethyl)imidazolidin-2-on (2-Ureidomethacrylat, UMA).

Die zuvor genannten Monomere (M) können einzeln, in Form von Mischungen innerhalb einer Monomerklasse oder in Form von Mischungen aus verschiedenen Monomerklassen eingesetzt werden.

Vorzugsweise werden zur Emulsionspolymerisation mindestens 40 Gew.-%, besonders bevorzugt mindestens 60 Gew.-%, insbesondere mindestens 80 Gew.-%, bezogen auf das Gesamtgewicht der Monomere M), wenigstens eines Monomers M1) eingesetzt, das ausgewählt ist unter Estern $\alpha,\beta$-ethylenisch ungesättigter Mono- und Dicarbonsäuren mit $C_1$-$C_{20}$-Alkanolen, Vinylaromaten, Estern von Vinylalkohol mit $C_1$-$C_{30}$-Monocarbonsäuren, ethylenisch ungesättigten Nitrilen, Vinylhalogeniden, Vinylidenhalogeniden und Mischungen davon (Hauptmonomere). Vorzugsweise werden die Monomere M1) in einer Menge von bis zu 95 Gew.-%, bezogen auf das Gesamtgewicht der Monomere M), zur Emulsionspolymerisation eingesetzt.

Die Hauptmonomere M1) sind vorzugsweise ausgewählt unter Methyl(meth)acrylat, Ethyl(meth)acrylat, n-Propyl(meth)acrylat, Isopropyl(meth)acrylat, n-Butyl(meth)acrylat, sec.-Butyl(meth)acrylat, tert.-Butyl(meth)acrylat, n-Pentyl(meth)acrylat, n-Hexyl(meth)acrylat, n-Heptyl(meth)acrylat, n-Octyl(meth)acrylat, 2-Ethylhexyl(meth)acrylat, Isobornyl(meth)acrylat, Styrol, 2-Methylstyrol, Vinylacetat, Acrylnitril, Methacrylnitril und Mischungen davon.

Zusätzlich zu wenigstens einem Hauptmonomer M1) kann bei der radikalischen Emulsionspolymerisation zur Herstellung von (PD) wenigstens ein weiteres Monomer M2) eingesetzt werden, das allgemein in untergeordnetem Maße vorliegt (Nebenmonomere). Vorzugsweise werden zur Emulsionspolymerisation bis zu 60 Gew.-%, besonders bevorzugt bis zu 40 Gew.-%, insbesondere bis zu 20 Gew.-%, bezogen auf das Gesamtgewicht der Monomere M), wenigstens eines Monomers M2) eingesetzt, das ausgewählt ist unter ethylenisch ungesättigten Mono- und Dicarbonsäuren und den Anhydriden und Halbestern ethylenisch ungesättigter Dicarbonsäuren, (Meth)acrylamiden, $C_1$-$C_{10}$-Hydroxyalkyl(meth)acrylaten, $C_1$-$C_{10}$-Hydroxyalkyl(meth)-acrylamiden und Mischungen davon. Vorzugsweise werden die Monomere M2), soweit vorhanden, in einer Menge von mindestens 0,1 Gew.-%, besonders bevorzugt mindestens 0,5 Gew.-%, insbesondere mindestens 1 Gew.-%, bezogen auf das Gesamtgewicht der Monomere M), zur Emulsionspolymerisation eingesetzt.

Besonders bevorzugt werden zur Emulsionspolymerisation 0,1 bis zu 60 Gew.-%, bevorzugt 0,5 bis 40 Gew.-%, insbesondere 1 bis 20 Gew.-% wenigstens eines Monomers M2) eingesetzt. Die Monomere M2) sind speziell ausgewähltaus Acrylsäure, Methacrylsäure, Itaconsäure, Maleinsäure, Fumarsäure, Maleinsäureanhydrid, Acrylsäureamid, Methacrylsäureamid, 2-Hydroxyethylacrylat, 2-Hydroxyethylmethacrylat, 2-Hydroxyethylacrylamid, 2-Hydroxyethylmethacrylamid, Acetoacetoxyethyl methacrylat (AAEM), Allylmethacrylat, Vinylmethacrylat, Hydroxybutenylmethacrylat, Allyl- oder diallylester der Maleinsäure, Poly(allylglycidyl ether)und Mischungen davon, in Form verschiedener Produkte der Bezeichnung Bisomer® von Laporte Performance Chemicals, UK. Dazu zählt z. B. Bisomer® MPEG 350 MA, ein Methoxypolyethylenglykolmo-nomethacrylat oder UMA. Insbesonders bevorzugt wird AAEM in Mengen von 0,1 bis 20, bevorzugt von 0,1 bis 4,9 Gew.-% eingesetzt. Besonders geeignete Kombinationen an Hauptmonomeren M1) für das erfindungsgemäße Verfahren sind beispielsweise:

n-Butylacrylat, Methylmethacrylat;
n-Butylacrylat, Methylmethacrylat, Styrol;
n-Butylacrylat, Styrol, Butyl(meth)acrylat;
n-Butylacrylat, Ethylhexylacrylat, Styrol.
n-Butylacrylat, Styrol
n-Butylacrylat, n-Butyl(meth)acrylat, Methylmethacrylat

Die zuvor genannten besonders geeigneten Kombinationen an Hauptmonomeren M1) können mit besonders geeigneten Monomeren (M2) kombiniert werden, die vorzugsweise ausgewählt sind unter Acrylsäure, Methacrylsäure, Acrylamid, Methacrylamid, AAEM, UMA oder Bisomer® und Mischungen davon.

Unter einem Alkydharz versteht man einen Polyester, der mit einem trocknenden Öl, einer Fettsäure oder dergleichen verestert ist (U. Poth, Polyester und Alkydharze, Vincentz Network 2005).

Unter einem wässrigen Alkydharz versteht man insbesondere eine, gegebenenfalls nach Neutralisation, wasserverdünnbare Alkydharzlösung basierend auf einem Alkydharz mit ausreichend hoher Säurezahl von vorzugsweise 20-80 mg KOH/g Alkydharz fest, und einem gewichtsmittleren Molekulargewicht von > 5000 und < 40000 Da, bevorzugt > 8000 und < 35000 Da und besonders bevorzugt > 10000 und < 35000 Da.

Die Molekulargewichte werden mit Größenausschlusschromatographie (SEC) bestimmt.

Unter Säurezahl versteht man die Menge Kaliumhydroxid, ausgedrückt in mg, die notwendig ist um 1 g der Probe zu neutralisieren.

Das verwendete Öl bzw. die Fettsäure ist die eigenschaftsbestimmende Komponente. Sie erlaubt eine Unterteilung nach dem Fettsäuretriacylglycerol-Gehalt (Ölgehalt, Öl-länge) in kurzölige Alkydharze mit <40 %, mittelölige Alkydharze mit 40 -60 % und langölige Alkydharze mit >60 % Triacylglycerol, bezogen auf lösemittelfreies Alkydharz (Fettsäure-Gehalt ggf. in Triacylglycerol umrechnen, Faktor ca. 1,045) (Ölgehalt).

Der Feststoffgehalt charakterisiert nach allgemeiner Praxis den "Wirkstoffgehalt" der Dispersion. Die Dispersion wird üblicherweise bei einer Temperatur zwischen 100 und 140 °C bis zur Gewichtskonstanz getrocknet (siehe ISO-Norm 1625). Der Feststoffgehalt gibt die Trockenmasse im Vergleich zur Gesamtmasse (in %) an.

Die Trockenmasse umfaßt das Polymerisat, Emulgatoren und anorganische Salze (aus Initiatorzersetzung und Neutralisierung). Zu den flüchtigen Bestandteilen zählen das Wasser und die Monomere, die bei der Polymerisation nicht umgesetzt wurden.

Der Ölgehalt der verwendeten Alkydharze beträgt 25-55%, der Feststoffgehalt beträgt in der Lieferform: 30-80%, in der Einsatzform (nach Verdünnung mit $NH_3$ bzw. NaOH/Wasser) 35-50%.

Bevorzugte Alkydharze sind beispielsweise die Produkte WorléeSol® 61A, WorléeSol® 61 E, WorléeSol® 65A der Firma Worlee, und Synthalat® W46 oder Synthalat® W48 , der Firma Synthopol.

Unter einer wäßrigen Alkydharzemulsion oder kurz Alkydemulsion versteht man Alkydharze, die ggf. mit Emulgatoren versetzt, in Wasser dispergiert werden. Im vergleich zu wasserlöslichen oder verdünnbaren Alkydharzen eignen sich hierfür auch Alkyde mit höheren mittleren Molmassen.[U. Poth, Polyester und Alkydharze, Vincentz Network 2005, S 183 f]

Unter einer wäßrigen Polyurethan-Alkydharzemulsion versteht man ein Polyurethanmodifiziertes Alkydharz, welches in Wasser dispergiert wurde. Eine Urethanmodifizierung kann bei der Alkydsynthese zum Beispiel durch den Ersatz eines Teils des üblichen Phthalsäureanhydrids durch ein Diisocyanat erfolgen.[U. Poth, Polyester und Alkydharze, Vincentz Network 2005, S 205 f] Eine Urethanmodifizierung kann des weiteren durch eine Reaktion eines Alkyds mit einem mindestens difunktionellen Polyisocyanat erfolgen.[DE102006054237 Bayer MaterialScience AG]

Bevorzugte Alkydharzemulsionen zeichnen sich durch einen Ölgehalt von 25-55 %und eine Säurezahl von 20-60 mg KOH/g aus.

Bevorzugte Alkydharzemulsionen bzw. Polyurethan-modifizierte Alkydharzemulsionen sind WorléeSol® E 150 W, WorléeSol® E 280 W, WorléeSol® E 530 W oder Worlée-Sol® E 927 W.

Bevorzugt werden zur Herstellung der Polymerdispersion (PD) wässrige Alkyd- oder Polyurethan-Alkydemulsionen eingesetzt.

Bei der Herstellung der erfindungsgemäßen Polymerdispersionen kann zusätzlich zu den zuvor genannten Monomeren (M) wenigstens ein Vernetzer eingesetzt werden.

Monomere, die eine vernetzende Funktion besitzen, sind Verbindungen mit mindestens zwei polymerisierbaren, ethylenisch ungesättigten, nichtkonjugierten Doppelbindungen im Molekül. Eine Vernetzung kann auch z. B. durch photochemische Aktivierung erfolgen. Dazu kann zur Herstellung von (PD) zusätzlich wenigstens ein Monomeren mit photoaktivierbaren Gruppen eingesetzt werden. Photoinitiatoren können auch separat zugesetzt werden. Eine Vernetzung kann auch z. B. durch funktionelle Gruppen erfolgen, welche mit dazu komplementären funktionellen Gruppen eine chemische Vernetzungsreaktion eingehen können. Dabei können die komplementären Gruppen beide an das Emulsionspolymerisat gebunden sein oder zur Vernetzung kann ein Vernetzer eingesetzt werden, der befähigt ist, mit funktionellen Gruppen des Emulsionspolymerisats eine chemische Vernetzungsreaktion eingehen zu können.

Geeignete Vernetzer sind z. B. Acrylester, Methacrylester, Allylether oder Vinylether von mindestens zweiwertigen Alkoholen. Die OH-Gruppen der zugrundeliegenden Alkohole können dabei ganz oder teilweise verethert oder verestert sein; die Vernetzer enthalten aber mindestens zwei ethylenisch ungesättigte Gruppen.

Beispiele für die zugrundeliegenden Alkohole sind zweiwertige Alkohole wie 1,2-Ethandiol, 1,2-Propandiol, 1,3-Propandiol, 1,2-Butandiol, 1,3-Butandiol, 2,3-Butandiol, 1,4-Butandiol, But-2-en-1,4-diol, 1,2-Pentandiol, 1,5-Pentandiol, 1,2-Hexandiol, 1,6-Hexandiol, 1,10-Decandiol, 1,2-Dodecandiol, 1,12-Dodecandiol, Neopentylglykol, 3-Methylpentan-1,5-diol, 2,5-Dimethyl-1,3-hexandiol, 2,2,4-Trimethyl-1,3-pentandiol, 1,2-Cyclohexandiol, 1,4-Cyclohexandiol, 1,4-Bis(hydroxymethyl)cyclohexan, Hydroxypivalinsäure-neopentylglykolmonoester, 2,2-Bis(4-hydroxyphenyl)-propan, 2,2-Bis[4-(2-hydroxypropyl)phenyl]propan, Diethylenglykol, Triethylenglykol, Tetraethylenglykol, Dipropylenglykol, Tripropylenglykol, Tetrapropylenglykol, 3-Thiapentan-1,5-diol, sowie Polyethylenglykole, Polypropylenglykole und Polytetrahydrofurane mit Molekulargewichten von jeweils 200 bis 10 000. Außer den Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Cyanursäure, Sorbitan, Zucker wie Saccharose, Glucose, Mannose. Selbstverständlich können die mehrwertigen Alkohole auch nach Umsetzung mit Ethylenoxid oder Propylenoxid als die entsprechenden Ethoxylate bzw. Propoxylate eingesetzt werden. Die mehrwertigen Alkohole können auch zunächst durch Umsetzung mit Epichlorhydrin in die entsprechenden Glycidylether überführt werden.

Weitere geeignete Vernetzer sind die Vinylester oder die Ester einwertiger, ungesättigter Alkohole mit ethylenisch ungesättigten $C_3$-$C_6$-Carbonsäuren, beispielsweise Acrylsäure, Methacrylsäure, Itaconsäure, Maleinsäure oder Fumarsäure. Beispiele für solche Alkohole sind Allylalkohol, 1-Buten-3-ol, 5-Hexen-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-1-ol. Man kann aber auch die einwertigen, ungesättigten Alkohole mit mehrwertigen Carbonsäuren verestern, beispielsweise Malonsäure, Weinsäure, Trimellithsäure, Phthalsäure, Terephthalsäure, Citronensäure oder Bernsteinsäure.

Weitere geeignete Vernetzer sind Ester ungesättigter Carbonsäuren mit den oben beschriebenen mehrwertigen Alkoholen, beispielsweise der Ölsäure, Crotonsäure, Zimtsäure oder 10-Undecensäure.

Geeignet als Vernetzer sind außerdem geradkettige oder verzweigte, lineare oder cyclische, aliphatische oder aromatische Kohlenwasserstoffe, die über mindestens zwei Doppelbindungen verfügen, die bei aliphatischen Kohlenwasserstoffen nicht konjugiert sein dürfen, z. B. Divinylbenzol, Divinyltoluol, 1,7-Octadien, 1,9-Decadien, 4-Vinyl-1-cyclohexen, Trivinylcyclohexan oder Polybutadiene mit Molekulargewichten von 200 bis 20 000.

Als Vernetzer sind ferner geeignet die Acrylsäureamide, Methacrylsäureamide und N-Allylamine von mindestens zweiwertigen Aminen. Solche Amine sind z. B. 1,2-Diaminoethan, 1,3-Diaminopropan, 1,4-Diaminobutan, 1,6-Diaminohexan, 1,12-Dodecandiamin, Piperazin, Diethylentriamin oder Isophorondiamin. Ebenfalls geeignet sind die Amide aus Allylamin und ungesättigten Carbonsäuren, wie Acrylsäure, Methacrylsäure, Itaconsäure, Maleinsäure, oder mindestens zweiwertigen Carbonsäuren, wie sie oben beschrieben wurden.

Ferner sind Triallylamin und Triallylmonoalkylammoniumsalze, z. B. Triallylmethylammoniumchlorid oder -methylsulfat, als Vernetzer geeignet.

Geeignet sind auch N-Vinyl-Verbindungen von Harnstoffderivaten, mindestens zweiwertigen Amiden, Cyanuraten oder Urethanen, beispielsweise von Harnstoff, Ethylenharnstoff, Propylenharnstoff oder Weinsäurediamid, z. B. N,N'-Divinylethylenharnstoff oder N,N'-Divinylpropylenharnstoff.

Weitere geeignete Vernetzer sind Divinyldioxan, Tetraallylsilan oder Tetravinylsilan. Selbstverständlich können auch Mischungen der vorgenannten Verbindungen eingesetzt werden. Vorzugsweise werden wasserlösliche Vernetzer eingesetzt.

Weiterhin zählen zu den vernetzenden Monomeren auch solche, die neben einer ethylenisch ungesättigten Doppelbindung eine reaktive funktionelle Gruppe, z. B. eine Aldehydgruppe, eine Ketogruppe oder eine Oxirangruppe aufweisen, die mit einem zugesetzten Vernetzer reagieren können. Vorzugsweise handelt es sich bei den funktionellen Gruppen um Keto- oder Aldehydgruppen. Die Keto- oder Aldehydgruppen sind vorzugsweise durch Copolymerisation von copolymerisierbaren, ethylenisch ungesättigten Verbindungen mit Keto- oder Aldehydgruppen an das Polymer gebunden. Geeignete derartige Verbindungen sind Acrolein, Methacrolein, Vinylalkylketone mit 1 bis 20, vorzugsweise 1 bis 10 Kohlenstoffatomen im Alkylrest, Formylstyrol, (Meth-)acrylsäurealkylester mit ein oder zwei Keto- oder Aldehyd-, bzw. einer Aldehyd- und einer Ketogruppe im Alkylrest, wobei der Alkylrest vorzugsweise insgesamt 3 bis 10 Kohlenstoffatome umfasst, z. B. (Meth)acryloxyalkylpropanale, wie sie in der DE-A-2722097 beschrieben sind. Des Weiteren eignen sich auch N-Oxoalkyl(meth)acrylamide wie sie z. B. aus der US-A-4226007, der DE-A-2061213 oder DE-A-2207209 bekannt sind. Besonders bevorzugt sind Acetoacetyl(meth)acrylat, Acetoacetoxyethyl(meth)acrylat und insbesondere Diacetonacrylamid. Bei den Vernetzern handelt es sich vorzugsweise um eine Verbindung mit mindestens zwei funktionellen Gruppen, insbesondere zwei bis fünf funktionellen Gruppen, die mit den funktionellen Gruppen des Polymerisats, speziell den Keto- oder Aldehydgruppen, eine Vernetzungsreaktion eingehen können. Dazu zählen z. B. Hydrazid-, Hydroxylamin- oder Oximether- oder Aminogruppen als funktionelle Gruppen für die Vernetzung der Keto- oder Aldehydgruppen. Geeignete Verbindungen mit Hydrazidgruppen sind z. B. Polycarbonsäurehydrazide mit einem Molgewicht von bis zu 500 g/mol. Besonders bevorzugte Hydrazidverbindungen sind Dicarbonsäuredihydrazide mit bevorzugt 2 bis 10 C-Atomen. Dazu zählen z. B. Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Von besonderem Interesse sind: Adipinsäuredihydrazid, Sebazinsäuredihydrazid und Isophthalsäuredihydrazid. Geeignete Verbindungen mit Hydroxylamin- oder Oximethergruppen sind z. B. in WO 93/25588 genannt.

Auch durch eine entsprechende Additivierung der wässrigen Polymerdispersion (PD) kann zusätzlich eine Oberflächenvernetzung erzeugt werden. Dazu zählt z. B. Zugabe eines Photoinitiators oder Sikkativierung. Als Photoinitiatoren kommen solche in Frage, die durch Sonnenlicht angeregt werden, beispielsweise Benzophenon oder Benzophenonderivate. Zur Sikkativierung eignen sich die für wässrige Alkydharze empfohlenen Metallverbindungen, beispielsweise auf Basis von Co oder Mn (Überblick in U. Poth, Polyester und Alkydharze, Vincentz Network 2005, S 183 f).

Die vernetzende Komponente wird vorzugsweise in einer Menge von 0,0005 bis 5 Gew.-%, bevorzugt 0,001 bis 2,5 Gew.-%, insbesondere 0,01 bis 1,5 Gew.-%, bezogen auf das Gesamtgewicht der zur Polymerisation eingesetzten Monomere (einschließlich des Vernetzers), eingesetzt.

Eine spezielle Ausführungsform sind Polymerdispersionen (PD), die keinen Vernetzer einpolymerisiert enthalten.

Die radikalische Polymerisation des Monomergemischs M) kann in Gegenwart mindestens eines Reglers erfolgen. Regler werden vorzugsweise in einer Einsatzmenge von 0,0005 bis 5 Gew.-%, besonders bevorzugt von 0,001 bis 2,5 Gew.-% und insbesondere von 0,01 bis 1,5 Gew.-%, bezogen auf das Gesamtgewicht der zur Polymerisation eingesetzten Monomere, eingesetzt.

Als Regler (Polymerisationsregler) werden allgemein Verbindungen mit hohen Übertragungskonstanten bezeichnet. Regler beschleunigen Kettenübertragungsreaktionen und bewirken damit eine Herabsetzung des Polymerisationsgrades der resultierenden Polymeren, ohne die Bruttoreaktions-Geschwindigkeit zu beeinflussen. Bei den Reglern kann man zwischen mono-, bi- oder polyfunktionalen Reglern unterscheiden, je nach Anzahl der funktionellen Gruppen im Molekül, die zu einer oder mehreren Kettenübertragungsreaktionen führen können. Geeignete Regler werden beispielsweise ausführlich beschrieben von K. C. Berger und G. Brandrup in J. Brandrup, E. H. Immergut, Polymer Handbook, 3. Aufl., John Wiley & Sons, New York, 1989, S. II/81 - II/141.

Als Regler eignen sich beispielsweise Aldehyde wie Formaldehyd, Acetaldehyd, Propionaldehyd, n-Butyraldehyd, Isobutyraldehyd.

Ferner können auch als Regler eingesetzt werden: Ameisensäure, ihre Salze oder Ester, wie Ammoniumformiat, 2,5-Diphenyl-1-hexen, Hydroxylammoniumsulfat, und Hydroxylammoniumphosphat.

Weitere geeignete Regler sind Halogenverbindungen, z. B. Alkylhalogenide wie Tetrachlormethan, Chloroform, Bromtrichlormethan, Bromoform, Allylbromid und Benzylverbindungen wie Benzylchlorid oder Benzylbromid.

Weitere geeignete Regler sind Allylverbindungen, wie z. B. Allylalkohol, funktionalisierte Allylether, wie Allylethoxylate, Alkylallylether oder Glycerinmonoallylether.

Bevorzugt werden als Regler Verbindungen eingesetzt, die Schwefel in gebundener Form enthalten.

Verbindungen dieser Art sind beispielsweise anorganische Hydrogensulfite, Disulfite und Dithionite oder organische Sulfide, Disulfide, Polysulfide, Sulfoxide und Sulfone. Dazu zählen Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid, Dimethylsulfoxid, Dialkylsulfid, Dialkyldisulfid und/oder Diarylsulfid.

Geeignet als Polymerisationsregler sind weiterhin Thiole (Verbindungen, die Schwefel in Form von SH-Gruppen enthalten, auch als Mercaptane bezeichnet). Bevorzugt sind als Regler mono-, bi- und polyfunktionale Mercaptane, Mercaptoalkohole und/oder Mercaptocarbonsäuren. Beispiele für diese Verbindungen sind Allylthioglykolate, Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan.

Beispiele für bifunktionale Regler, die zwei Schwefelatome in gebundener Form enthalten sind bifunktionale Thiole wie z. B. Dimercaptopropansulfonsäure (Natriumsalz), Dimercaptobernsteinsäure, Dimercapto-1-propanol, Dimercaptoethan, Dimercaptopropan, Dimercaptobutan, Dimercaptopentan, Dimercaptohexan, Ethylenglykol-bisthioglykolate und Butandiol-bis-thioglykolat. Beispiele für polyfunktionale Regler sind Verbindungen, die mehr als zwei Schwefelatome in gebundener Form enthalten. Beispiele hierfür sind trifunktionale und/oder tetrafunktionale Mercaptane.

Alle genannten Regler können einzeln oder in Kombination miteinander eingesetzt werden. Eine spezielle Ausführungsform betrifft Polymerdispersionen PD, die durch radikalische Emulsionspolymerisation ohne Zusatz eines Reglers hergestellt werden.

Zur Herstellung der Polymerisate können die Monomeren mit Hilfe von Radikale bildenden Initiatoren polymerisiert werden.

Als Initiatoren für die radikalische Polymerisation können die hierfür üblichen Peroxo- und/oder Azo-Verbindungen eingesetzt werden, beispielsweise Alkali- oder Ammoniumperoxidisulfate, Diacetylperoxid, Dibenzoylperoxid, Succinylperoxid, Di-tert.-butylperoxid, tert.-Butylperbenzoat, tert.-Butylperpivalat, tert.-Butylperoxy-2-ethylhexanoat, tert.-Butylpermaleinat, Cumolhydroperoxid, Diisopropylperoxidicarbamat, Bis-(o-toluoyl)peroxid, Didecanoylperoxid, Dioctanoylperoxid, Dilauroylperoxid, tert.-Butylperisobutyrat, tert.-Butylperacetat, Di-tert.-Amylperoxid, tert.-Butylhydroperoxid, Azo-bis-isobutyronitril, 2,2'-Azo-bis-(2-amidinopropan)dihydrochlorid oder 2-2'-Azo-bis-(2-methyl-butyronitril). Geeignet sind auch Gemische dieser Initiatoren.

Als Initiatoren können auch Reduktions-/Oxidations-(= Red-Ox)-Initiator Systeme eingesetzt werden. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponente handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxodisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die Menge der Initiatoren beträgt im Allgemeinen 0,1 bis 10 Gew.-%, bevorzugt 0,1 bis 5 Gew.-%, bezogen auf alle zu polymerisierenden Monomeren. Es können auch mehrere, verschiedene Initiatoren bei der Emulsionspolymerisation Verwendung finden.

Die Herstellung der Polymerdispersion (PD), erfolgt üblicherweise in Gegenwart wenigstens einer grenzflächenaktiven Verbindung. Eine ausführliche Beschreibung geeigneter Schutzkolloide findet sich in Houben-Weyl, Methoden der organischen Chemie, Band XIV/1, Makromolekulare Stoffe, Georg Thieme Verlag, Stuttgart, 1961, S. 411 bis 420. Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Als Emulgatoren sind sowohl anionische, kationische als auch nichtionische Emulgatoren geeignet. Vorzugsweise werden als grenzflächenaktive Substanzen Emulgatoren eingesetzt, deren relative Molekulargewichte üblicherweise unterhalb derer von Schutzkolloiden liegen.

Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_{10}$), Ethoxylate langkettiger Alkohole (EO-Grad: 3 bis 100, Alkylrest: $C_8$-$C_{36}$) sowie Polyethylenoxid/Polypropylenoxid-Homo- und Copolymere. Diese können die Alkylenoxideinheiten statistisch verteilt oder in Form von Blöcken einpolymerisiert enthalten. Gut geeignet sind z. B. EO/PO-Blockcopolymere. Bevorzugt werden Ethoxylate langkettiger Alkanole (Alkylrest $C_1$-$C_{30}$, mittlerer Ethoxylierungsgrad 5 bis 100) und darunter besonders bevorzugt solche mit einem linearen $C_{12}$-$C_{20}$-Alkylrest und einem mittleren Ethoxylierungsgrad von 10 bis 50 sowie ethoxylierte Monoalkylphenole, eingesetzt.

Geeignete anionische Emulgatoren sind beispielsweise Alkali- und Ammoniumsalze von Alkylsulfaten (Alkylrest: $C_8$-$C_{22}$), von Schwefelsäure- oder Phosphorsäurehalbestern ethoxylierter Alkanole (EO-Grad: 2 bis 50, Alkylrest: $C_{12}$-$C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$-$C_{18}$). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren sind ebenfalls Bis(phenylsulfonsäure)ether bzw. deren Alkali- oder Ammoniumsalze, die an einem oder beiden aromatischen Ringen eine $C_4$-$C_{24}$-Alkylgruppe tragen, geeignet. Diese Verbindungen sind allgemein bekannt, z. B. aus der US-A-4,269,749, und im Handel erhältlich, beispielsweise als Dowfax® 2A1 (Dow Chemical Company).

Weitere Emulgatoren sind die Ester, d.h. die Mono- und Diester, der Phosphorsäure mit gegebenenfalls bis zu 20-fach alkoxylierten $C_8$-$C_{30}$-Alkanolen, speziell die Monoester. Häufig werden die Mono- und die Diester als Gemisch nebeneinander bereitgestellt.

Weitere geeignete Emulgatoren sind auch die Diester der Phosphorsäure, die einfach mit einem gegebenenfalls bis zu 20-fach alkoxylierten $C_8$-$C_{30}$-Alkanol und zusätzlich einfach mit einem davon verschiedenen $C_1$-$C_{30}$-Alkanol, bevorzugt mit einem $C_1$-$C_7$-Alkanol, verestert sind.

Bevorzugt als Emulgatoren sind Verbindungen der allgemeinen Formel $C_sH_{2s+1}O(CH_2CH_2O)_t$-$P(=O)(OH)_2$, worin s für 6 bis 30 steht und t für 0 bis 20 steht.

Bevorzugt als Emulgatoren sind z.B.

Maphos 24 T ($C_{10}H_{21}O(CH_2CH_2O)_4$-$P(=O)(OH)_2$) und

Maphos 10 T ((2-Ethylhexyl)phosphat), beide von BASF BTC.

Weitere geeignete Emulgatoren sind auch die Lutensit®-Typen der BASF SE, wie z.B. Lutensit® A-EP (Fettalkoholalkoxylat, Phosphorsäureester) oder auch Lutensit® HC9812 (Fettalkoholethoxylat, Phosphorsäureester, Polymer).

Die erfindungsgemäßen Polymerdispersionen (PD) enthalten im Allgemeinen bis zu 20 Gew.-%, bevorzugt bis zu 10 Gew.-%, besonders bevorzugt bis zu 5 Gew.-% wenigstens eines Emulgators, bezogen auf das Gesamtgewicht der zur Emulsionspolymerisation eingesetzten Monomere. Die erfindungsgemäßen Polymerdispersionen (PD) enthalten im Allgemeinen wenigstens 0,05 Gew.-%, bevorzugt wenigstens 0,1 Gew.-% wenigstens eines Emulgators, bezogen auf das Gesamtgewicht der zur Emulsionspolymerisation eingesetzten Monomere.

Geeignete kationische Emulgatoren sind vorzugsweise quartäre Ammoniumhalogenide, z. B. Trimethylcetylammoniumchlorid, Methyltrioctylammoniumchlorid, Benzyltriethylammoniumchlorid oder quartäre Verbindungen von N-$C_6$-$C_{20}$-Alkylpyridinen, -morpholinen oder -imidazolen, z. B. N-Laurylpyridiniumchlorid.

Die Menge an Emulgator beträgt im Allgemeinen etwa 0,01 bis 10 Gew.-%, bevorzugt 0,1 bis 5 Gew.-%, bezogen auf die Menge an zu polymerisierenden Monomeren.

Den Polymerdispersionen (PD) können weiterhin übliche Hilfs- und Zusatzstoffe zugesetzt werden. Dazu zählen beispielsweise den pH-Wert einstellende Substanzen, Reduktions- und Bleichmittel, wie z. B. die Alkalimetallsalze der Hydroxymethansulfinsäure (z. B. Rongalit® C der BASF SE), Komplexbildner, Desodorantien, Geschmacksstoffe, Geruchsstoffe und Viskositätsmodifizierer, wie Alkohole, z. B. Glycerin, Methanol, Ethanol, tert.-Butanol, Glykol etc. Diese Hilfs- und Zusatzstoffe können den Polymerdispersionen in der Vorlage, einem der Zuläufe oder nach Abschluss der Polymerisation zugesetzt werden.

Die Polymerisation erfolgt im Allgemeinen bei Temperaturen in einem Bereich von 0 bis 150 °C, bevorzugt 20 bis 100 °C, besonders bevorzugt 30 bis 95 °C. Die Polymerisation erfolgt vorzugsweise bei Normaldruck, möglich ist jedoch auch eine Polymerisation unter erhöhtem Druck, beispielsweise dem Eigendruck der zur Polymerisation eingesetzten Komponenten. In einer geeigneten Ausführung erfolgt die Polymerisation in Gegenwart wenigstens eines Inertgases, wie z. B. Stickstoff oder Argon.

Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes oder auch eine Polymersaat vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Die bei der Polymerisation entstandenen Dispersionen können im Anschluss an den Polymerisationsprozess einer physikalischen oder chemischen Nachbehandlung (chemische Desodorierung) unterworfen werden. Solche Verfahren sind beispielsweise die bekannten Verfahren zur Restmonomerenreduzierung, wie z. B. die Nachbehandlung durch Zusatz von Polymerisationsinitiatoren oder Mischungen mehrerer Polymerisationsinitiatoren bei geeigneten Temperaturen, eine Nachbehandlung der Polymerlösung mittels Wasserdampf oder Ammoniakdampf, oder Strippen mit Inertgas oder Behandeln der Reaktionsmischung mit oxidierenden oder reduzierenden Reagenzien, Adsorptionsverfahren wie die Adsorption von Verunreinigung an ausgewählten Medien wie z. B. Aktivkohle oder eine Ultrafiltration.

Die wässrige Acrylat-Alkyd-Polymerdispersion (PD) weist üblicherweise einen Feststoffgehalt von 20 bis 70 Gew.-%, vorzugsweise 40 bis 65 Gew.-%, bezogen auf die Polymerdispersion einschließlich eingesetztem wasserlöslichen Alkydharz oder eingesetzter wäßriger Alkydharzemulsion oder Polyurethanalkydharzemulsion. Der Feststoffgehalt beträgt in einer speziellen Ausführung 30-55 Gew.-%, bevorzugt 35 bis 50 Gew.-%, besonders bevorzugt 40 bis 50 Gew.-%, bezogen auf die wässrigeAcrylat-Alkyd-Polymerdispersion einschließlich eingesetztem wasserlöslichen Alkydharz oder eingesetzter wäßriger Alkydharzemulsion oder Polyurethanalkydharzemulsion.

Die theoretische Glasübergangstemperatur $T_g$ des Acrylatteils der Acrylat-Alkyd-Polymerdispersion ist vorzugsweise kleiner als 50 °C aber größer als 20°C, besonders bevorzugt kleiner als 40 °C aber größer als 20°C, insbesondere kleiner als 30 °C aber größer als 20°C.

Unter der Glasübergangstemperatur $T_g$ wird hier die gemäß ASTM D 3418-82 durch Differentialthermoanalyse (DSC) ermittelte "mid-point temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

Nach Fox (siehe Ullmanns Enzyklopädie der technischen Chemie, 4. Auflage, Band 19, Weinheim (1980), S. 17, 18) kann man die Glasübergangstemperatur $T_G$ abschätzen.

Es gilt für die Glasübergangstemperatur von schwach bzw. unvernetzten Mischpolymerisaten bei großen Molmassen in guter Näherung:

$$\frac{1}{Tg} = \frac{X^1}{Tg^1} + \frac{X^2}{Tg^2} + \ldots\ldots \frac{X^n}{Tg^n}$$

wobei $X^1$, $X^2$, ..., $X^n$ die Massenbrüche 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, 5.ed. Weinheim, Vol. A 21 (1992) S. 169 oder aus J. Brandrup, E.H. Immergut, Polymer Handbook 3rd ed, J. Wiley, New York 1989 bekannt.

Die erhaltene wässrige Polymerdispersion (PD) kann als solche oder gemischt mit weiteren, in der Regel filmbildenden, Polymeren als Bindemittelzusammensetzung in wässrigen Beschichtungsmitteln, wie Farb- oder Lackmischungen, verwendet werden.

Ein weiterer Gegenstand der Erfindung ist ein Beschichtungsmittel in Form einer wässrigen Zusammensetzung, enthaltend wenigstens eine Dispersion (PD), wie zuvor definiert, die ein wasserlösliches Alkydharz oder eine wäßrige Alkydharzemulsion oder Polyurethanalkydharzemulsion enthält. Dabei werden die wasserlöslichen Alkydharze oder wäßrigen Alkydharzemulsionen oder Polyurethanalkydharzemulsionen mit dem Acrylat, wie zuvor definiert im Anschluß an die radikalische Acrylatpolymerisation oder der der radikalischen Acrylatpolymerisation nachgeschalteten chemischen Nachbehandlung (Desodorierung) zur Reaktion gebracht.

Die erfindungsgemäßen Bindemittelzusammensetzungen kommen vorzugsweise in wässrigen Anstrichmitteln zum Einsatz. Diese Anstrichmittel liegen beispielsweise in Form eines unpigmentierten Systems (Klarlacks) oder eines pigmentierten Systems vor. Der Anteil der Pigmente kann durch die Pigmentvolumenkonzentration (PVK) beschrieben werden. Die PVK beschreibt das Verhältnis des Volumens an Pigmenten ($V_P$) und Füllstoffen ($V_F$) zum Gesamtvolumen, bestehend aus den Volumina an Bindemittel ($V_B$), Pigmenten und Füllstoffen eines getrockneten Beschichtungsfilms in Prozent: PVK = ($V_P$ + $V_F$) x 100 / ($V_P$ + $V_F$ + $V_B$). Anstrichmittel lassen sich anhand der PVK beispielsweise wie folgt einteilen:

| | |
|---|---|
| hochgefüllte Innenfarbe, waschbeständig, weiß/matt | ca. 85 |
| Innenfarbe, scheuerbeständig, weiß/matt | ca. 80 |
| Halbglanzfarbe, seidenmatt | ca. 35 |
| Halbglanzfarbe, seidenglänzend | ca. 25 |
| Hochglanzfarbe | ca. 15-25 |
| Außenfassadenfarbe, weiß | ca. 45-55 |
| Klarlack | 0 |

Ein weiterer Gegenstand der Erfindung ist ein Beschichtungsmittel in Form einer wässrigen Zusammensetzung, enthaltend:

- wenigstens eine Dispersion (PD), wie zuvor definiert,
- gegebenenfalls wenigstens einen anorganischen Füllstoff und/oder wenigstens ein anorganisches Pigment,
- gegebenenfalls wenigstens ein übliches Hilfsmittel, und
- Wasser.

Der Anteil von (PD) an dem obigen Beschichtungsmittel bezieht sich auf Feststoff, d. h. auf das Acrylat-Alkyd-Polymer ohne Wasser.

Die erfindungsgemäßen Beschichtungsmittel in Form einer wässrigen Zusammensetzung kommen vorzugsweise als Anstrichmittel zum Einsatz. Eine Ausführungsform sind Anstrichmittel in Form eines Klarlacks. Eine weitere Ausführungsform sind Anstrichmittel in Form einer Dispersionsfarbe. Die erfindungsgemäßen pigmentierten Beschichtungsmittel liegen vorzugsweise in Form einer wässrigen Seidenglanz- oder einer Hochglanzfarbe vor.

Im Folgenden wird die Zusammensetzung einer üblichen Dispersionsfarbe erläutert. Dispersionsfarben enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Füllstoff, Pigment, schwerflüchtigen Lösungsmitteln (Siedepunkt oberhalb 250 °C), z. B. Weichmacher, und polymere Hilfsmittel. Davon entfallen etwa

a) 3 bis 90 Gew.-%, insbesondere 10 bis 60 Gew.-%, auf die feinteilige Polymerdispersion (PD), wie zuvor definiert,
b) 0 bis 85 Gew.-%, bevorzugt 5 bis 60 Gew.-%, insbesondere 10 bis 50 Gew.-%, auf wenigstens ein anorganisches Pigment,
c) 0 bis 85 Gew.-%, insbesondere 5 bis 60 Gew.-%, auf anorganische Füllstoffe und
d) 0,1 bis 40 Gew.-%, insbesondere 0,5 bis 20 Gew.-%, auf übliche Hilfsmittel, und Wasser auf 100 Gew.-%.

Besonders bevorzugt eignen sich die erfindungsgemäßen Polymerdispersionen zur Herstellung hochglänzender Dispersionsfarben. Diese sind in der Regel durch eine Pigmentvolumenkonzentration PVK im Bereich von 12 bis 30 % charakterisiert. Aber auch für Fassadenfarben mit einer PVK im Bereich von 30 bis 65 oder Innenfarben mit einer PVK im Bereich von 65 bis 80 sind die erfindungsgemäßen Polymerdispersionen besonders geeignet.

Zu den Pigmenten zählen anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Rhopaque®-Dispersionen.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Zu den üblichen Hilfsmitteln zählen neben den bei der Polymerisation eingesetzten Emulgatoren, Netz- oder Dispergiermittel, wie Aminoalkohole, z.B. 2-Amino-2-methyl-propanol-1, oder Blockcopolymere mit hydrophoben und hydrophilen, beispielsweise Poly-EO-, Blöcken, Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Weitere geeignete Hilfsmittel sind Verlaufsmittel, Mattierungsmittel, Additive zur Verbesserung von Block- und Kratzfestigkeit, Entschäumer, Biozide und Verdicker. Geeignete Verdicker sind z. B. Assoziativverdicker, wie Polyurethanverdicker und hydrophob modifizierte Acrylatverdicker. Die Menge des Verdickers beträgt vorzugsweise weniger als 1 Gew.-%, besonders bevorzugt weniger als 0,6 Gew.-% Verdicker, bezogen auf Feststoffgehalt des Anstrichmittels.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen.

Die erfindungsgemäßen Anstrichmittel enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Pigment und Hilfsmittel. Bei den flüchtigen Bestandteilen handelt es sich vorwiegend um Wasser.

Das erfindungsgemäße Anstrichmittel kann in üblicher Weise auf Substrate aufgebracht werden, z. B. durch Streichen, Spritzen, Tauchen, Rollen, Rakeln etc.

Die erfindungsgemäßen Anstrichmittel werden eingesetzt im Bereich der dekorativen Beschichtungen für glänzende und hochglänzende Oberflächen. Untergründe können Holz, Metal, Kunststoff, Papier oder sonstige sein.

Das Anstrichmittel findet beispielsweise Anwendung für Gebäudeinnenteile, z. B. Innenwände, Innentüren, Vertäfelungen, Treppengeländer, Möbel. oder aber im Außenbereich z.B. für die Beschichtung von Balkonbrüstungen, Zäunen, Fenstern, Verbretterungen, Gartenhäusern, Gartenmöbeln etc.

Die erfindungsgemäßen Anstrichmittel zeichnen sich aus durch einfache Handhabung, gute Verarbeitungseigenschaften und hohes Deckvermögen. Die Anstrichmittel sind schadstoffarm. Sie haben gute anwendungstechnische Eigenschaften, z. B. eine gute Wasserfestigkeit, gute Nasshaftung, insbesondere auch auf Alkydfarben, gute Blockfestigkeit, eine gute Überstreichbarkeit und sie zeigen beim Auftragen einen guten Verlauf. Das verwendete Arbeitsgerät lässt sich leicht mit Wasser reinigen.

Die Erfindung wird anhand der folgenden nicht einschränkenden Beispiele näher erläutert.

Beispiele

1. Herstellung von wässrigen Lacken

Die einzelnen Komponenten (Herstellernachweis s. Tabelle 1) wurden in der Menge (Gewichtsteile) und Reihenfolge, wie in Tabelle 2 angegeben, unter Rühren mit einem Zahnscheibenrührer zudosiert. Nach Zugabe des Titandioxidpigments wurde die Drehzahl auf 2000 Upm erhöht und solange dispergiert, bis die Pigmentpaste glatt, d. h. frei von Klümpchen war. Dann ließ man, falls erforderlich, auf Raumtemperatur abkühlen und gab die restlichen Komponenten bei reduzierter Drehzahl zu.

Tabelle 1

| Funktion | Name | Hersteller |
|---|---|---|
| Dispergiermittel | Disperbyk® 190 (hochmolekulares Blockcopolymer mit pigmentaktiven Gruppen) | Byk-Chemie GmbH, Wesel |
| Entschäumer | Byk® 020 (Polysiloxan) | Byk-Chemie GmbH, Wesel |
| | Tego Airex® 902W (kieselsäurehaltiges Poly(ether-siloxan)-Copolymer | Tego Chemie, Essen |
| Titandioxidpigment | Kronos® 2190 | Kronos Titan GmbH, Leverkusen |
| Verdicker | DSX 2000 und DSX 1514 (Assoziativ-Verdicker auf Polyurethanbasis) | Cognis Deutschland GmbH & Co. KG, Düsseldorf |

Tabelle 2: Formulierung der wässrigen Beschichtungsmittel

| Komponente | Name | Menge [g] |
|---|---|---|
| Wasser | | 10,72 |
| Entschäumer | Byk® 020 | 0,96 |
| Dispergiermittel | Disperbyk® 190 | 4,7 |
| Verdicker | DSX 2000/1514 (1:0.3) | 2,46 |
| Titandioxidpigment | Kronos® 2190 | 47,16 |
| Paste | | 66 |
| Wasser | | 7,7 |

(fortgesetzt)

| Komponente | Name | Menge [g] |
|---|---|---|
| Lösemittel | Propylenglycol | 4,36 |
| Entschäumer | Tego Airex® 902W | 0,04 |
| Bindemittel | | 121,9 |
| Gesamt | | 200,0 |

2. Prüfung der wässrigen Lacke (Beschichtungsmittel)

Die Bestimmung des Glanzes des Anstrichmittels erfolgt nach DIN EN ISO 2813: Das Anstrichmittel wird mit 240 µm Spaltweite auf eine Glasplatte aufgetragen und 72 Stunden lang bei Raumtemperatur getrocknet. Der Prüfkörper wird in ein kalibriertes Reflektometer Typ haze-gloss (Fa. Byk-Gardner, Geretsried) eingesetzt und der Reflektometerwert bei 20 und 60° Einstrahlwinkel sowie der Haze (Glanzschleier) abgelesen. Der ermittelte Reflektometerwert ist ein Maß für den Glanz (je höher der Wert ist, desto höher ist der Glanz).

Vergleichsbeispiel 1

In einem mit Dosiereinrichtungen und Temperaturregelung ausgerüstetem Polymerisationsgefäß wurden vorgelegt:

| | | |
|---|---|---|
| Vorlage: | 116 g | Wasser |
| | 19,2 g | einer Polystyrolsaatdispersion mit einem Feststoffgehalt von 33% und einer mittleren Teilchengröße von 30 nm |
| | 1,5 g | einer 15%igen Lösung von Natriumlaurylsulfat |

und unter Rühren auf 85°C erhitzt. Anschließend wurde, unter Aufrechterhaltung dieser Temperatur 10% von Zulauf 3 zugegeben und 5 min gerührt. Danach wurde Zulauf 1 und 2 in 180 min zudosiert und parallel dazu die Restmenge von Zulauf 3 in 195 min.

| | | |
|---|---|---|
| Zulauf 1: | 79,5 g | Wasser |
| | 51,2 g | einer 15%igen Lösung von Natriumlaurylsulfat |
| | 117 g | n-Butylacrylat |
| | 97,1 g | Methylmethacrylat |
| | 65,5 g | Styrol |
| | 13,5 g | Acetoacetoxyethylmethacrylat |
| Zulauf 2: | 371 g | einer 42.5%igen wäßrigen Lösung von WorléeSol 61 E, welches vorher mit 25%iger wäßriger Ammoniaklösung neutralisiert wurde |
| Zulauf 3: | 72,2 g | einer 2.5%igen wäßrigen Lösung von Natriumperoxodisulfat |

Beim Beenden von Zulauf 3 wurde anschließend 30 min nachpolymerisiert und mit 0,51 g einer 25%igen wäßrigen Lösung von Ammoniak neutralisiert. Danach wurde 5,42 g einer 5%igen wäßrigen Lösung von Wasserstoffperoxid zugegeben und 2,3 g einer 10% wäßrigen Lösung von Ascorbinsäure (ASCS) in 60 min zudosiert. Anschließend wurde die Dispersion abgekühlt und über einen 125 µm Filter filtriert. Es wurde 1,04 kg einer 45%igen Dispersion erhalten.

Beispiel 1

In einem mit Dosiereinrichtungen und Temperaturregelung ausgerüstetem Polymerisationsgefäß wurden vorgelegt:

| | | |
|---|---|---|
| Vorlage: | 116 g | Wasser |
| | 19,2 g | einer Polystyrolsaatdispersion mit einem Feststoffgehalt von 33% |

(fortgesetzt)

|  | und |  |
|---|---|---|
|  | einer mittleren Teilchengröße von 30 nm |  |
| 1,5 g | einer 15%igen Lösung von Natriumlaurylsulfat |  |

und unter Rühren auf 85°C erhitzt. Anschließend wurde, unter Aufrechterhaltung dieser Temperatur 10% von Zulauf 3 zugegeben und 5 min gerührt. Danach wurde Zulauf 1 in 180 min zudosiert und parallel dazu die Restmenge von Zulauf 3 in 195 min.

| Zulauf 1: | 79,5 g | Wasser |
|---|---|---|
|  | 51,2 g | einer 15%igen Lösung von Natriumlaurylsulfat |
|  | 117 g | n-Butylacrylat |
|  | 97,1 g | Methylmethacrylat |
|  | 65,5 g | Styrol |
|  | 13,5 g | Acetoacetoxyethylmethacrylat |
| Zulauf 2: | 393 g | einer 42.5%igen wäßrigen Lösung von WorléeSol 61E, welches vorher mit 25%iger wäßriger Ammoniaklösung neutralisiert wurde |
| Zulauf 3: | 72,2 g | einer 2.5%igen wäßrigen Lösung von Natriumperoxodisulfat |

Beim Beenden von Zulauf 3 wurde 22,6 g Spülwasser zudosiert und anschließend 30 min nachpolymerisiert. Zulauf 2 wurde in 1 h zudosiert und anschließend wurde mit 1,81 g einer 25%igen wäßrigen Lösung von Ammoniak neutralisiert.

Anschließend wurde die Dispersion abgekühlt und über einen 125 $\mu$m Filter filtriert. Es wurde 1,04 kg einer 45%igen Dispersion erhalten.

Beispiel 2

Wie Beispiel 1, aber Dosierung von Zulauf 2 in 2 h.

Beispiel 3

Wie Beispiel 1, aber Dosierung von Zulauf 2 in 3 h.

Beispiel 4

In einem mit Dosiereinrichtungen und Temperaturregelung ausgerüstetem Polymerisationsgefäß wurden vorgelegt:

| Vorlage: | 116 g | Wasser |
|---|---|---|
|  | 19,2 g | einer Polystyrolsaatdispersion mit einem Feststoffgehalt von 33% und |
|  |  | einer mittleren Teilchengröße von 30 nm |
|  | 1,5 g | einer 15%igen Lösung von Natriumlaurylsulfat |

und unter Rühren auf 85°C erhitzt. Anschließend wurde, unter Aufrechterhaltung dieser Temperatur 10% von Zulauf 3 zugegeben und 5 min gerührt. Danach wurde Zulauf 1 in 180 min zudosiert und parallel dazu die Restmenge von Zulauf 3 in 195 min.

| Zulauf 1: | 79,5 g | Wasser |
|---|---|---|
|  | 51,2 g | einer 15%igen Lösung von Natriumlaurylsulfat |
|  | 117 g | n-Butylacrylat |
|  | 97,1 g | Methylmethacrylat |
|  | 65,5 g | Styrol |
|  | 13,5 g | Acetoacetoxyethylmethacrylat |

(fortgesetzt)

| Zulauf 2: | 393 g | einer 42.5%igen wäßrigen Lösung von WorléeSol 61 E, welches vorher mit 25%iger wäßriger Ammoniaklösung neutralisiert wurde |
| Zulauf 3: | 72,2 g | einer 2.5%igen wäßrigen Lösung von Natriumperoxodisulfat |

Beim Beenden von Zulauf 3 wurde 22,6 g Spülwasser zudosiert und anschließend 30 min nachpolymerisiert. Danach wurden 5,42 g einer 5%igen wäßrigen Lösung von Wasserstoffperoxid zugegeben und 2,3 g einer 10% wäßrigen Lösung von Ascorbinsäure (ASCS) in 1 h zudosiert. Zulauf 2 wurde in 1 h zudosiert und anschließend wurde mit 1,81 g einer 25%igen wäßrigen Lösung von Ammoniak neutralisiert.

Anschließend wurde die Dispersion abgekühlt und über einen 125 µm Filter filtriert. Es wurde 1,04 kg einer 45%igen Dispersion erhalten.

Beispiel 5

Wie Beispiel 4, aber Dosierung von Zulauf 2 in 2 h.

Beispiel 6

Wie Beispiel 4, aber Dosierung von Zulauf 2 in 3 h.

Verwendung einer wäßrigen Polyurethan-modifizierten Alkydemulsion

Vergleichsbeispiel 2

In einem mit Dosiereinrichtungen und Temperaturregelung ausgerüstetem Polymerisationsgefäß wurden vorgelegt:

| Vorlage: | 116 g | Wasser |
| | 19,2 g | einer Polystyrolsaatdispersion mit einem Feststoffgehalt von 33% und einer mittleren Teilchengröße von 30 nm |
| | 1,5 g | einer 15%igen Lösung von Natriumlaurylsulfat |

und unter Rühren auf 85°C erhitzt. Anschließend wurde, unter Aufrechterhaltung dieser Temperatur 10% von Zulauf 3 zugegeben und 5 min gerührt. Danach wurde Zulauf 1 und 2 in 180 min zudosiert und parallel dazu die Restmenge von Zulauf 3 in 195 min.

| Zulauf 1: | 55,3 g | Wasser |
| | 51,2 g | einer 15%igen Lösung von Natriumlaurylsulfat |
| | 117 g | n-Butylacrylat |
| | 97,1 g | Methylmethacrylat |
| | 65,5 g | Styrol |
| | 13,5 g | Acetoacetoxyethylmethacrylat |
| Zulauf 2: | 395 g | WorléeeSol® E 150 W |
| Zulauf 3: | 72,2 g | einer 2.5%igen wäßrigen Lösung von Natriumperoxodisulfat |

Beim Beenden von Zulauf 3 wurde anschließend 30 min nachpolymerisiert und mit 1.81 g einer 25%igen wäßrigen Lösung von Ammoniak neutralisiert. Danach wurde 5,42 g einer 5%igen wäßrigen Lösung von Wasserstoffperoxid zugegeben und 2,3 g einer 10% wäßrigen Lösung von Ascorbinsäure (ASCS) in 60 min zudosiert. Es wurde mit 0.9 g einer 25%igen wäßrigen Ammoniaklösung neutralisiert. Anschließend wurde die Dispersion abgekühlt und über einen 125 µm Filter filtriert. Es wurde 1,04 kg einer 45%igen Dispersion erhalten.

Beispiel 7

In einem mit Dosiereinrichtungen und Temperaturregelung ausgerüstetem Polymerisationsgefäß wurden vorgelegt:

Vorlage:
- 116 g Wasser
- 19,2 g einer Polystyrolsaatdispersion mit einem Feststoffgehalt von 33% und einer mittleren Teilchengröße von 30 nm
- 1,5 g einer 15%igen Lösung von Natriumlaurylsulfat

und unter Rühren auf 85°C erhitzt. Anschließend wurde, unter Aufrechterhaltung dieser Temperatur 10% von Zulauf 3 zugegeben und 5 min gerührt. Danach wurde Zulauf 1 in 180 min zudosiert und parallel dazu die Restmenge von Zulauf 3 in 195 min.

Zulauf 1:
- 55,3 g Wasser
- 51,2 g einer 15%igen Lösung von Natriumlaurylsulfat
- 117 g n-Butylacrylat
- 97,1 g Methylmethacrylat
- 65,5 g Styrol
- 13,5 g Acetoacetoxyethylmethacrylat

Zulauf 2: 395 g WorléeSol® E 150 W

Zulauf 3: 72,2 g einer 2.5%igen wäßrigen Lösung von Natriumperoxodisulfat

Nach Beendigung des Zulaufs 3 wurde 22,6 g Spülwasser zudosiert und anschließend 30 min nachpolymerisiert. Es wurde mit 1.81 g einer 25%igen wäßrigen Ammoniaklösung neutralisiert und fünf Minuten gerührt. Danach wurden 5,42 g einer 5%igen wäßrigen Lösung von Wasserstoffperoxid zugegeben und 2,3 g einer 10% wäßrigen Lösung von Ascorbinsäure (ASCS) in 1 h zudosiert. Zulauf 2 wurde in 1 h zudosiert und anschließend wurde mit 0.9 g einer 25%igen wäßrigen Ammoniaklösung neutralisiert. Anschließend wurde die Dispersion abgekühlt und über einen 125 $\mu$m Filter filtriert. Es wurde 1,04 kg einer 45%igen Dispersion erhalten.

Ergebnisse

| Beispiel | Summe Restmonomere | Glanz 20° | Glanz 60° | Glanzschleier |
|---|---|---|---|---|
| Vergleichsbeispiel 1 | 8951 ppm | 79 | 91 | 38 |
| Beispiel 1 | 2530 ppm | 79 | 91 | 97 |
| Beispiel 2 | 1870 ppm | 78 | 90 | 55 |
| Beispiel 3 | 1630 ppm | 79 | 91 | 46 |
| Beispiel 4 | 1380 ppm | 85* | 92* | 0* |
| Beispiel 5 | 730 ppm | 77 | 91 | 57 |
| Beispiel 6 | 750 ppm | 79 | 91 | 55 |
| Vergleichsbeispiel 2 | 7560 ppm | 52 | 81 | 135 |
| Beispiel 7 | 1080 ppm | 62 | 86 | 109 |
| *Trocknung 1 d RT dann 14 d bei 50 °C Summe der Restmonomeren bezieht sich auf die Acrylatalkydhybride; Glanz- und Hazewerte beziehen sich auf die gemäß Formulierung Tabelle 2 hergestellten Lacke | | | | |

**Patentansprüche**

1. Verfahren zur Herstellung einer wässrigen Polymerdispersion (PD) durch radikalische Emulsionspolymerisation von

   (a) mindestens einem α,β-ethylenisch ungesättigten Monomer (M)
   (b) sowie gegebenenfalls wenigstens einem weiteren Monomer (M1) zu einem Polymer (P)
   (c) gegebenenfalls anschließender chemischer Desodorierung und
   (d) Zugabe mindestens eines wasserlöslichen Alkydharzes mit einem gewichtsmittleren Molekulargewicht zwischen 5000 und 40 000 Da oder mindestens einer wäßrigen Alkyd- oder Polyurethan-Alkydemulsion,
   **dadurch gekennzeichnet, dass** die Zugabe des Alkydharzes oder der Alkyd- oder Polyurethan-Alkydemulsion entweder im Anschluß an die Polymerisation von M und M1, mit einer Nachrührzeit von 0-2 h oder im Anschluß an die chemische Desodorierung mit einer Nachrührzeit von 0-2 h erfolgt, wobei die Temperatur bei der Zugabe 60 bis 99 °C beträgt.

2. Verfahren gemäß Anspruch 1, **dadurch gekennzeichnet, dass** die Zugabe des Alkydharzes oder der Alkyd- oder Polyurethan-Alkydemulsion im Anschluß an die Polymerisation von M und M1 erfolgt, mit einer Nachrührzeit von 0-2 h.

3. Verfahren gemäß Anspruch 1, **dadurch gekennzeichnet, dass** die Zugabe des Alkydharzes oder der Alkyd- oder Polyurethan-Alkydemulsion im Anschluß an die chemische Desodorierung mit einer Nachrührzeit von 0-2 h erfolgt.

4. Verfahren gemäß einem der Ansprüche 1 bis 3, **dadurch gekennzeichnet, dass** die Temperatur bei der Zugabe des Alkydharzes oder der Alkyd- oder Polyurethan-Alkydemulsion 70 bis 95 °C beträgt.

5. Verfahren gemäß einem der Ansprüche 1 bis 3, **dadurch gekennzeichnet, dass** die Temperatur bei der Zugabe des Alkydharzes oder der Alkyd- oder Polyurethan-Alkydemulsion 80 bis 90 °C beträgt.

6. Verfahren gemäß einem der Ansprüche 1 bis 5, **dadurch gekennzeichnet, dass** als Alkyd eine wässrige Alkyd- oder Polyurethan-Alkydemulsion eingesetzt wird.

7. Verfahren gemäß einem der Ansprüche 1 bis 6, **dadurch gekennzeichnet, dass** die Hauptmonomern M1, ausgewählt sind aus Kombinationen der Gruppe
   n-Butylacrylat, Methylmethacrylat;
   n-Butylacrylat, Methylmethacrylat, Styrol;
   n-Butylacrylat, Styrol, Butyl(meth)acrylat;
   n-Butylacrylat, Ethylhexylacrylat, Styrol.
   n-Butylacrylat, Styrol oder
   n-Butylacrylat, n-Butyl(meth)acrylat, Methylmethacrylat

8. Verfahren gemäß Anspruch 7, **dadurch gekennzeichnet, dass** als Monomere M2 in Kombination mit den Monomeren M1 gemäß Anspruch 6 Acrylsäure, Methacrylsäure, Acrylamid, Methacrylamid, AAEM, UMA oder Bisomer ® oder Mischungen davon eingesetzt werden.

9. Verfahren gemäß einem der Ansprüche 1 bis 8, **dadurch gekennzeichnet, dass** das wässrige Alkydharz eine Säurezahl von 20-80 mg KOH/g und ein gewichtsmittleres Molekulargewicht von > 5000 und < 40000 Da und einen Ölgehalt von 25-55% aufweist.

10. Verfahren gemäß einem der Ansprüche 1 bis 6, **dadurch gekennzeichnet, dass** die wässrige Alkydharzemulsion eine Säurezahl von 20-60 mg KOH/g und einen Ölgehalt von 25-55% aufweist.

11. Verfahren gemäß einem der Ansprüche 1 bis 10, **dadurch gekennzeichnet, dass** die wässrige Polymerdispersionen (PD) bis zu 20 Gew.-%, wenigstens eines Emulgators, bezogen auf das Gesamtgewicht der zur Emulsionspolymerisation eingesetzten Monomere enthält.

12. Verfahren gemäß einem der Ansprüche 1 bis 11, **dadurch gekennzeichnet, dass** die Glasübergangstemperatur $T_g$ des Acrylatteils der Acrylat-Alkyd-Polymerdispersion (PD) kleiner als 50 °C aber größer als 20°C ist.

13. Verwendung einer wässrigen Polymerdispersion (PD) gemäß einem der Ansprüche 1 bis 12 als Bindemittel in Anstrichmitteln.

**14.** Verwendung einer wässrigen Polymerdispersion (PD) gemäß Anspruch 13, **dadurch gekennzeichnet, dass** es sich bei dem Anstrichmittel um einen Klarlack oder eine Dispersionsfarbe handelt.

**15.** Verwendung einer wässrigen Polymerdispersion (PD) gemäß Anspruch 13, **dadurch gekennzeichnet, dass** es sich bei dem Anstrichmittel um einen hochglänzenden Klarlack oder eine hochglänzende Dispersionsfarbe handelt.

**16.** Beschichtungsmittel in Form einer wässrigen Zusammensetzung, enthaltend:

- wenigstens eine Polymerdispersion (PD), gemäß einem der Ansprüche 1 bis 12,
- gegebenenfalls wenigstens einen anorganischen Füllstoff und/oder wenigstens ein anorganisches Pigment,
- gegebenenfalls wenigstens ein übliches Hilfsmittel, und
- Wasser.

**17.** Dispersionfarbe enthaltend

a) 3 bis 90 Gew.-%, feinteilige Polymerdispersion (PD), gemäß einem der Ansprüche 1 bis 12,
b) 0 bis 85 Gew.-%, wenigstens eines anorganischen Pigments,
c) 0 bis 85 Gew.-%, anorganische Füllstoffe und
d) 0,1 bis 40 Gew.-%, übliche Hilfsmittel,
und Wasser auf 100 Gew.-%.

**18.** Dispersionsfarbe gemäß Anspruch 17, **dadurch gekennzeichnet, dass** die Pigmentvolumenkonznetration im Bereich von 12 bis 30 % liegt.

**19.** Verfahren zur Erhöhung des Glanzes einer Beschichtung auf Basis einer wässrigen Polymerdispersion (PD) gemäß einem der Ansprüche 1 bis 12.

**Claims**

**1.** A process for preparing an aqueous polymer dispersion (PD) by free-radical emulsion polymerization of

(a) at least one $\alpha$, $\beta$-ethylenically unsaturated monomer (M),
(b) and also, if desired, at least one further monomer (M1), to give a polymer (P),
(c) if desired, subsequent chemical deodorization and
(d) addition of at least one water-soluble alkyd resin having a weight-average molecular weight of between 5000 and 40 000 Da, or of at least one aqueous alkyd emulsion or polyurethane-alkyd emulsion,
which comprises adding the alkyd resin or the alkyd emulsion or polyurethane-alkyd emulsion either subsequent to the polymerization of M and M1, with an afterstir time of 0-2 h, or subsequent to the chemical deodorization, with an afterstir time of 0-2 h, the temperature at addition being 60 to 99°C.

**2.** The process according to claim 1, wherein the addition of the alkyd resin or of the alkyd emulsion or polyurethane-alkyd emulsion takes place subsequent to the polymerization of M and M1, with an afterstir time of 0-2 h.

**3.** The process according to claim 1, wherein the addition of the alkyd resin or of the alkyd emulsion or polyurethane-alkyd emulsion takes place subsequent to the chemical deodorization, with an afterstir time of 0-2 h.

**4.** The process according to any of claims 1 to 3, wherein the temperature on addition of the alkyd resin or of the alkyd emulsion or polyurethane-alkyd emulsion is 70 to 95°C.

**5.** The process according to any of claims 1 to 3, wherein the temperature on addition of the alkyd resin or of the alkyd emulsion or polyurethane-alkyd emulsion is 80 to 90°C.

**6.** The process according to any of claims 1 to 5, wherein alkyd used is an aqueous alkyd emulsion or polyurethane-alkyd emulsion.

**7.** The process according to any of claims 1 to 6, wherein the principal monomers M1 are selected from combinations from the following group:

n-butyl acrylate, methyl methacrylate;
n-butyl acrylate, methyl methacrylate, styrene;
n-butyl acrylate, styrene, butyl (meth)acrylate;
n-butyl acrylate, ethylhexyl acrylate, styrene;
n-butyl acrylate, styrene; or
n-butyl acrylate, n-butyl methacrylate, methyl methacrylate.

**8.** The process according to claim 7, wherein monomers M2 used in combination with the monomers M1 according to claim 6 are acrylic acid, methacrylic acid, acrylamide, methacrylamide, AAEM, UMA or Bisomer® or mixtures thereof.

**9.** The process according to any of claims 1 to 8, wherein the aqueous alkyd resin has an acid number of 20-80 mg KOH/g and a weight-average molecular weight of > 5000 and < 40 000 Da and an oil content of 25-55%.

**10.** The process according to any of claims 1 to 6, wherein the aqueous alkyd resin emulsion has an acid number of 20-60 mg KOH/g and an oil content of 25-55%.

**11.** The process according to any of claims 1 to 10, wherein the aqueous polymer dispersion (PD) comprises up to 20% by weight of at least one emulsifier, based on the total weight of the monomers used for the emulsion polymerization.

**12.** The process according to any of claims 1 to 11, wherein the glass transition temperature, $T_g$, of the acrylate portion of the acrylate-alkyd polymer dispersion (PD) is less than 50°C but greater than 20°C.

**13.** The use of an aqueous polymer dispersion (PD) according to any of claims 1 to 12 as a binder in a coating material.

**14.** The use of an aqueous polymer dispersion (PD) according to claim 13, wherein the coating material is a clear varnish or an emulsion paint.

**15.** The use of an aqueous polymer dispersion (PD) according to claim 13, wherein the coating material is a high-gloss clear varnish or a high-gloss emulsion paint.

**16.** A coating composition in the form of an aqueous composition comprising:

- at least one polymer dispersion (PD), according to any of claims 1 to 12,
- if desired, at least one inorganic filler and/or at least one inorganic pigment,
- if desired, at least one customary auxiliary,
and
- water.

**17.** An emulsion paint comprising

a) 3% to 90% by weight of finely divided polymer dispersion (PD) according to any of claims 1 to 12,
b) 0% to 85% by weight of at least one inorganic pigment,
c) 0% to 85% by weight of inorganic fillers, and
d) 0.1% to 40% by weight of customary auxiliaries, and water to 100% by weight.

**18.** The emulsion paint according to claim 17, wherein the pigment volume concentration is in the range from 12% to 30%.

**19.** A method of enhancing the gloss of a coating based on an aqueous polymer dispersion (PD) according to any of claims 1 to 12.

**Revendications**

**1.** Procédé pour la préparation d'une dispersion aqueuse de polymère (DP) par polymérisation en émulsion radicalaire

(a) d'au moins un monomère (M) à insaturation α, β-éthylénique

(b) ainsi qu'éventuellement d'au moins un autre monomère (M1) conduisant à un polymère (P)

(c) éventuellement désodorisation chimique subséquente et

(d) addition d'au moins une résine alkyde hydrosoluble ayant une masse moléculaire moyenne en poids comprise entre 5 000 et 40 000 Da ou d'au moins une émulsion aqueuse d'alkyde ou de polyuréthane-alkyde, **caractérisé en ce que** l'addition de la résine alkyde ou de l'émulsion d'alkyde ou de polyuréthane-alkyde s'effectue soit à la suite de la polymérisation de M et M1, avec un temps de post-agitation de 0-2 h, soit à la suite de la désodorisation chimique avec un temps de post-agitation de 0-2 h, la température lors de l'addition étant de 60 à 99 °C.

2. Procédé selon la revendication 1, **caractérisé en ce que** l'addition de la résine alkyde ou de l'émulsion d'alkyde ou de polyuréthane-alkyde s'effectue à la suite de la polymérisation de M et M1, avec un temps de post-agitation de 0-2 h.

3. Procédé selon la revendication 1, **caractérisé en ce que** l'addition de la résine alkyde ou de l'émulsion d'alkyde ou de polyuréthane-alkyde s'effectue à la suite de la désodorisation chimique avec un temps de post-agitation de 0-2 h.

4. Procédé selon l'une quelconque des revendications 1 à 3, **caractérisé en ce que** la température lors de l'addition de la résine alkyde ou de l'émulsion d'alkyde ou de polyuréthane-alkyde est de 70 à 95 °C.

5. Procédé selon l'une quelconque des revendications 1 à 3, **caractérisé en ce que** la température lors de l'addition de la résine alkyde ou de l'émulsion d'alkyde ou de polyuréthane-alkyde est de 80 à 90 °C.

6. Procédé selon l'une quelconque des revendications 1 à 5, **caractérisé en ce qu'**on utilise comme alkyde une émulsion aqueuse d'alkyde ou de polyuréthane-alkyde.

7. Procédé selon l'une quelconque des revendications 1 à 6, **caractérisé en ce que** les monomères principaux M1 sont choisis parmi des associations du groupe
acrylate de n-butyle, méthacrylate de méthyle ; acrylate de n-butyle, méthacrylate de méthyle, styrène ;
acrylate de n-butyle, styrène, (méth)acrylate de butyle ;
acrylate de n-butyle, acrylate d'éthylhexyle, styrène ; acrylate de n-butyle, styrène ou
acrylate de n-butyle, méthacrylate de n-butyle, méthacrylate de méthyle.

8. Procédé selon la revendication 7, **caractérisé en ce qu'**on utilise comme monomères M2 en association avec les monomères M1 selon la revendication 6 l'acide acrylique, l'acide méthacrylique, l'acrylamide, le méthacrylamide, AAEM, UMA ou le Bisomer® ou des mélanges de ceux-ci.

9. Procédé selon l'une quelconque des revendications 1 à 8, **caractérisé en ce que** la résine alkyde aqueuse présente un indice d'acide de 20-80 mg de KOH/g et une masse moléculaire moyenne en poids de > 5 000 et < 40 000 Da et une teneur en huile de 25-55 %.

10. Procédé selon l'une quelconque des revendications 1 à 6, **caractérisé en ce que** l'émulsion aqueuse de résine alkyde présente un indice d'acide de 20-60 mg de KOH/g et une teneur en huile de 25-55 %.

11. Procédé selon l'une quelconque des revendications 1 à 10, **caractérisé en ce que** la dispersion aqueuse de polymère (DP) contient jusqu'à 20 % en poids d'au moins un émulsifiant, par rapport au poids total des monomères utilisés dans la polymérisation en émulsion.

12. Procédé selon l'une quelconque des revendications 1 à 11, **caractérisé en ce que** la température de transition vitreuse $T_g$ de la partie acrylate de la dispersion de polymère-alkyde-acrylate (DP) est inférieure à 50 °C mais supérieure à 20 °C.

13. Utilisation d'une dispersion aqueuse de polymère (DP) selon l'une quelconque des revendications 1 à 12, en tant que liant dans des peintures et vernis.

14. Utilisation d'une dispersion aqueuse de polymère (DP) selon la revendication 13, **caractérisée en ce que** pour ce qui est de la peinture ou du vernis il s'agit d'un vernis ou d'une peinture en dispersion.

**15.** Utilisation d'une dispersion aqueuse de polymère (DP) selon la revendication 13, **caractérisée en ce que** pour ce qui est de la peinture ou du vernis il s'agit d'un vernis très brillant ou d'une peinture très brillante en dispersion.

**16.** Produit de revêtement sous forme d'une composition aqueuse contenant :

- au moins une dispersion de polymère (DP) selon l'une quelconque des revendications 1 à 12,
- éventuellement au moins une charge inorganique et/ou au moins un pigment inorganique,
- éventuellement au moins un adjuvant usuel, et
- de l'eau.

**17.** Peinture en dispersion, contenant

a) 3 à 90 % en poids de dispersion de polymère (DP) finement divisée, selon l'une quelconque des revendications 1 à 12,
b) 0 à 85 % en poids d'au moins un pigment inorganique,
c) 0 à 85 % en poids de charges inorganiques et
d) 0,1 à 40 % en poids d'adjuvants usuels,
et de l'eau en complément à 100 % en poids.

**18.** Peinture en dispersion selon la revendication 17, **caractérisée en ce que** la concentration en volume du pigment se situe dans la plage de 12 à 30 %.

**19.** Procédé pour l'augmentation du brillant d'un revêtement à base d'une dispersion aqueuse de polymère (DP) selon l'une quelconque des revendications 1 à 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2009072 A
- EP 874875 A
- DE 3132937
- US 6333378 B
- WO 2008152078 A
- WO 9925780 A
- US 4733005 A
- DE 102006054237
- DE 2722097 A
- US 4226007 A
- DE 2061213 A
- DE 2207209 A
- WO 9325588 A
- US 4269749 A

**In der Beschreibung aufgeführte Nicht-Patentliteratur**

- **U. POTH.** *Polyester und Alkydharze,* 2005, 183 f
- **K. C. BERGER ; G. BRANDRUP.** Polymer Handbook. John Wiley & Sons, 1989, II/81-II/141
- Methoden der organischen Chemie. **HOUBEN-WEYL.** Makromolekulare Stoffe. Georg Thieme Verlag, 1961, vol. XIV/1, 411-420
- Methoden der organischen Chemie. **HOUBEN-WEYL.** Makromolekulare Stoffe. Georg Thieme Verlag, 1961, vol. 14/1, 192-208
- Methoden der organischen Chemie. **HOUBEN-WEYL.** Makromolekulare Stoffe. Georg-Thieme-Verlag, 1961, vol. XIV/1, 192-208
- Ullmann's Encyclopedia of Industrial Chemistry. VCH, 1992, vol. A 21, 169
- Zosel, Farbe und Lack. 1976, vol. 82, 125-134
- Ullmanns Enzyklopädie der technischen Chemie. 1980, vol. 19, 17, , 18
- **J. BRANDRUP ; E.H. IMMERGUT.** Polymer Handbook. J. Wiley, 1989